# EUROPEAN PATENT APPLICATION

(11) **EP 1 473 645 A2**
(43) Date of publication of application: **03.11.2004**
(21) Application number: 04291103.2
(22) Date of filing: 29.04.2004
(51) Int. Cl.: G06F 17/50

(54) **Establishing and maintaining a relationship between a three-dimensional model and related data**

(30) Priority: 30.04.2003 US 467239 P
(71) Applicant: Solidworks Corporation, Concord, MA 01742 (US)
(72) Inventor: O'Malley, Austin, Acton, MA 01720 (US); Amadon, Gary, West Townsend, MA 01474 (US); Noftle, Robert D., Nashua, NH 03064 (US); Dollen, Frederick, Jr., Bedford, NH 03110 (US); Bishop, Mandi, Bedford, NH 03110 (US)
(74) Representative: Cabinet Hirsch

(57) **Abstract**

Maintaining a relationship between a model of an object and data relevant to the model includes storing data representing the model (i.e., the data utilized to construct the model for display by a computerized system), storing user-interface codes for enabling the retrieval of data relevant to the model, forming an association between the model and the user-interface codes, displaying a user interface in accordance with the user-interface codes (the user interface allowing for selection of the data relevant to the model), and initiating the retrieval of the data relevant to the model by analyzing a link associated with the plurality of user-interface codes to determine the location of the data relevant to the model.

## Description

### CROSS REFERENCE TO RELATED APPLICATIONS

This application claims priority to U.S. Provisional Application No. 60/467,239 filed April 30, 2003 and entitled "Establishing and Maintaining a Relationship between a Three-Dimensional Model and Related Data".

### BACKGROUND OF THE INVENTION

Computer-aided design (CAD) software allows a user to construct and manipulate complex three-dimensional (3D) models of assembly designs. A number of different modeling techniques can be used to create a model of an assembly. These techniques include solid modeling, wire-frame modeling, and surface modeling. Solid modeling techniques provide for topological 3D models, where the 3D model is a collection of interconnected edges and faces, for example. Geometrically, a 3D solid model is a collection of trimmed surfaces. The trimmed surfaces correspond to the topological faces bounded by the edges. Wire-frame modeling techniques, on the other hand, can be used to represent a model as a collection of simple 3D lines, whereas surface modeling can be used to represent a model as a collection of exterior surfaces. CAD systems may combine these and other modeling techniques, such as parametric modeling techniques.

Parametric modeling techniques can be used to define various parameters for different features and components of a model, and to define relationships between those features and components based on relationships between the various parameters. Solid modeling and parametric modeling can be combined in CAD systems supporting parametric solid modeling.

A design engineer is a typical user of a 3D CAD system. The design engineer designs physical and aesthetic aspects of 3D models, and is skilled in 3D modeling techniques. The design engineer creates parts and may assemble the parts into one or more subassemblies. In addition to parts, a subassembly may also consist of other subassemblies. Using parts and subassemblies, the design engineer designs an assembly. Hereinafter, parts and subassemblies are collectively referred to as components.

In addition to design engineers, engineers in other disciplines may use 3D CAD systems. For example, a manufacturing engineer may use a 3D CAD system to view, and possibly modify, a component to account for manufacturing processes used to build the component. In addition to viewing and possibly modifying a component using a 3D CAD system, a manufacturing engineer may need to know the specifications of different components and where to order a component.

Some component suppliers (e.g., manufacturers) make components available over the Internet in the form of an on-line catalog of CAD models. This enables a design engineer to download a pre-designed component and incorporate that component into a subassembly and/or assembly design. In addition to an on-line catalog, a catalog of CAD models may be available on a compact disc. A CAD model can be retrieved from the catalog, imported into a CAD system and incorporated into a product design. The design engineer benefits from the availability of pre-designed CAD models by not needing to design the component, by being able to evaluate a component prior to purchasing the component, and by using readably available components in a product design. The supplier benefits as well because once the component is designed into a 3D product model, a high probability exists that the supplier will receive an order for the component or perhaps for multiple quantities of the component.

The design-to-manufacturing process may extend over a considerably long period of time. For complex assemblies the process may take well over a year. During this time period, an engineer may need to obtain information about a component, obtain an updated version of the component, or order the component from the component supplier. The design engineer may have difficulties obtaining desired data concerning the designed-in component (e.g., factual information or updated 3D CAD files) because a relationship does not exist between the designed-in component and the supplier's World Wide Web site. (Hereinafter a World Wide Web site will simply be referred to as a web site.) The relationship may never have been established (e.g., the design engineer may never have known the Internet path to the needed information), or a link that once existed may have become stale (e.g., a known Internet address is no longer valid).

The number of people that rely on the content in a CAD model or information relevant to the content in the CAD model magnifies the problem of not being able to easily obtain data concerning the designed-in component. Companies may enter the CAD content into a Product Data Management (PDM) system for archiving data and tracking revisions of a product design. Manufacturing resource planning systems may require specifications for the CAD model. Moreover, those responsible for purchasing the component may not have the information necessary to do so (e.g., the supplier's contact information).

A further problem resulting from a non-existent or a tenuous relationship between a designed-in model and a supplier's web site is that other information that may be useful to the design engineer and others in the design-to-manufacturing process is not readably accessible. For example, a design or manufacturing engineer may need to understand the specifications of a component. Accessing a specification sheet over the Internet should be an easy task. However, the engineer needs a valid path to the supplier web site and to information about a particular component.

### SUMMARY OF THE INVENTION

Maintaining a relationship between a model of an object and data relevant to the model includes storing data representing the model (i.e., the data utilized to construct the model for display by a computerized system), storing user-interface codes for enabling the retrieval of data relevant to the model, forming an association between the model and the user-interface codes, displaying a user interface in accordance with the user-interface codes (the user interface allowing for selection of the data relevant to the model), and initiating the retrieval of the data relevant to the model by analyzing a link (e.g., a direct address link or an indirect address link) associated with the user-interface codes to determine the location of the data relevant to the model.

Implementations may include one or more of the following features. The data relevant to the model can be stored externally to the computerized system and a level of indirection provided between the computerized system and a location where the data is stored. The level of indirection may be provided via a data structure for associating one of a property or an indirect address with a direct address. The method can also include displaying a web page identified by the direct address in a web browser and updating the direct address to keep current with a web address for the web page. The user-interface codes may be generated by an automated process that obtains information (e.g., a filename, a property, and an indirect address) about the data relevant to the model. The data relevant to the model can include a specification sheet, an order form, cost data, contact information, factual information and a computer-aided design file, and/or an order form including multiple fields (and the fields can contain data transmitted from the computerized system to identify at least one user of the system and the model). The model may be automatically updated. The user-interface codes can include a set of instructions and data in an XML form.

Implementations may also include one or more of the following features. The association between the model and the user-interface codes is formed by storing the model, the user-interface codes, and/or the date relevant to the model in a compound file. The data relevant to the model is a file having a format that enables the display of the data relevant to the model as one or graphical data and a textual image. The association between the model and the user-interface codes is formed by storing the model and the user-interface codes in a computer-aided design assembly file.

The invention may be used in, e.g., a computerized modeling system, a product data management system, a quality control system, a materials requirement and planning system, a computerized numerical control system, a product data modeling system, an engineering resource planning system, a manufacturing resource planning system, and an order management system.

The details of one or more embodiments of the invention are set forth in the accompanying drawings and the description that follows. Other features, objects, and advantages of the invention will be apparent from the description and drawings, and from the claims.

### DESCRIPTION OF THE DRAWINGS

FIG. 1 is a diagram of a computer system.
FIG. 2A is an illustration of a model displayed in a window.
FIG. 2B is an illustration of a part displayed in a window.
FIG. 2C is an illustration of a part displayed in a window.
FIG. 2D is an illustration of a part included in an assembly.
FIG. 3 is an illustration of a compound file.
FIG. 4 is an illustration of a CAD model.
FIG. 5 is an illustration of the data flow between computerized systems operated by various users and a supplier's web site.
FIG. 6 is an illustration of the data flow between a user's computer system and a supplier's web site.
FIG. 7 is an illustration of a data structure containing pathnames.
FIG. 8 is a flowchart of a procedure utilizing a content hotlink.
FIG. 9 is a flowchart of a procedure for an update mechanism.
FIG. 10 is an illustration of a CAD assembly file with embedded content hotlinks.

### DETAILED DESCRIPTION OF THE INVENTION

The present invention establishes and maintains a relationship between a component utilized by a CAD system (e.g., a component designed into a product design), and data that is relevant to the component. Relevant data includes, by way of non-limiting example, specification sheets, updated 3D content, pricing data, and component supplier information (such as, contact names, addresses, and phone numbers). The relationship between the component and the relevant data is established and maintained by a linking mechanism, hereinafter referred to as a content hotlink. A design engineer, and others involved in the product design process, can activate a content hotlink and thereby automatically obtain needed information.

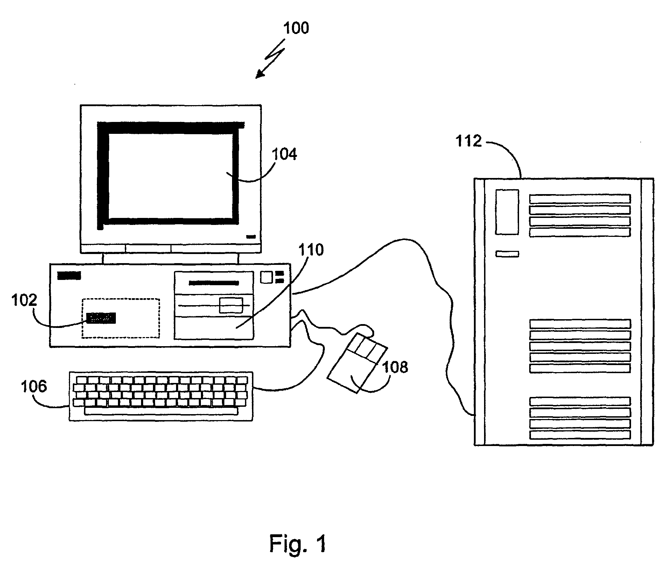

FIG. 1 shows a computerized modeling system 100 that includes a CPU 102, a CRT 104, a keyboard input device 106, a mouse input device 108, and a storage device 110. The CPU 102, CRT 104, keyboard 106, mouse 108, and storage device 110 can include commonly available computer hardware devices. For example, the CPU 102 can include a Pentium-based processor. The mouse 108 may have conventional left and right buttons that the user may press to issue a command to a software program being executed by the CPU 102. Other appropriate computer hardware platforms are suitable as will become apparent from the discussion that follows. Such computer hardware platforms are preferably capable of operating the Microsoft Windows NT, Windows 98, Windows 2000, Windows XP, Windows ME, UNIX, Linux, or MAC OS operating systems.

Additional computer processing units and hardware devices (e.g., video and printer devices) may be included in the computerized modeling system 100. Furthermore, the computerized modeling system 100 includes network hardware and software, and is connected to a computer network for facilitating communication between numerous computer systems (e.g., a hardware platform 112 that includes a CPU and a storage system, among other computer components) inside an organization as well as other computer systems outside an organization.

Computer-aided design (CAD) modeling software may be stored on the storage device 110 and is loaded into and executed by the CPU 102. The modeling software allows a design engineer to create and modify a 3D model and implements aspects of the invention described herein. The CPU 102 uses the CRT 104 to display a 3D model and other aspects thereof as described later in more detail. Using the keyboard 106 and the mouse 108, the design engineer can enter and modify data associated with the 3D model. The CPU 102 accepts and processes input from the keyboard 106 and mouse 108. The CPU 102 processes the input along with the data associated with the 3D model and makes corresponding and appropriate changes to that which is displayed on the CRT 104 as commanded by the modeling software.

In one embodiment, the modeling system is a solid modeling system that may be used to model an assembly of solid model components. The solid model may have relationships that parametrically constrain the definitions of one or more components or features with respect to one another. If a parametrically constrained relationship exists between two features, a geometric modification to one feature may cause a geometric modification in the other feature.

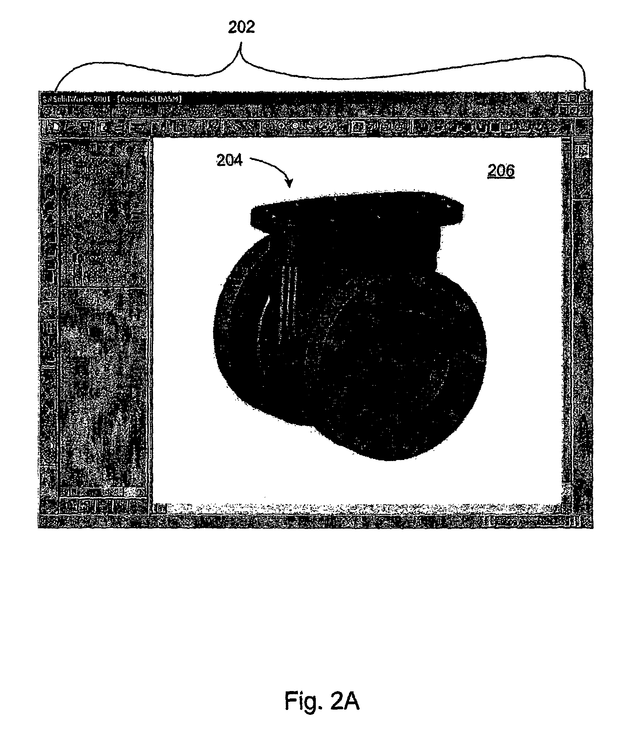

FIG. 2A shows a window 202 displayed on the CRT 104 and generated by CAD modeling software. The window 202 is a conventional computer-generated window that can be programmed by one of ordinary skill in the art using conventional, commercially available, software programming tools, such as those available from Microsoft Corporation of Redmond, Washington.

A computer-generated 3D model 204 is displayed within a modeling portion 206 of the window 202. The design engineer can construct and modify the 3D model 204 in a conventional manner. The surfaces of the 3D model 204 can be displayed, or the 3D model 204 can be displayed using solid lines and dashed lines to show visible edges and hidden edges, respectively, of the 3D model. Implementations also may include other window areas, such as a list of features 208, which helps the design engineer visualize and manipulate the model 204 shown in the modeling portion 206.

One or more components in the 3D model 204 may be obtained from a component supplier (e.g., a manufacturer or a distributor of manufactured goods). The supplier may deliver CAD components on a compact disc. Additionally, the supplier may make CAD components available over the Internet, either directly from the supplier's web site or from a computer server managed by a third-party. The 3D PartStream.NET® service, available from SolidWorks Corporation of Concord, Massachusetts, facilitates the delivery of 3D content (e.g., 3D geometry, parametric data, and supporting data structures) from suppliers to design engineers using on-line catalogs of 3D components. A design engineer may import a component into a computerized modeling system by, for example, simply specifying which file in the catalog to download to the computerized modeling system.

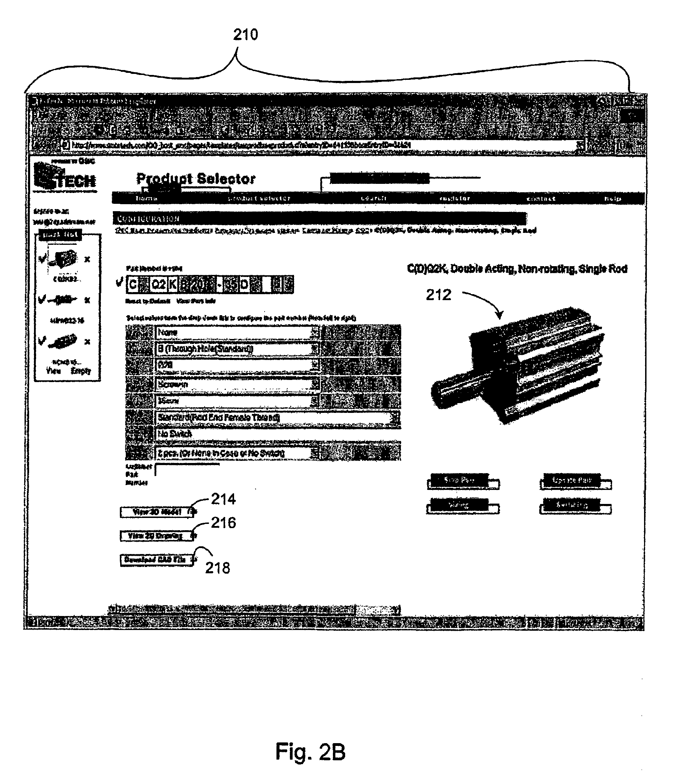

Referring to FIG. 2B, a part 212 is displayed in window 210. A design engineer may view a 3D model and a 2D drawing of the part 212 by activating button 214 and button 216, respectively. Additionally, the design engineer may download a part file that defines the part by activating button 218. When the part file is downloaded to the computerized modeling system, the part file is copied and stored in a location where CAD modeling software can open the part file.

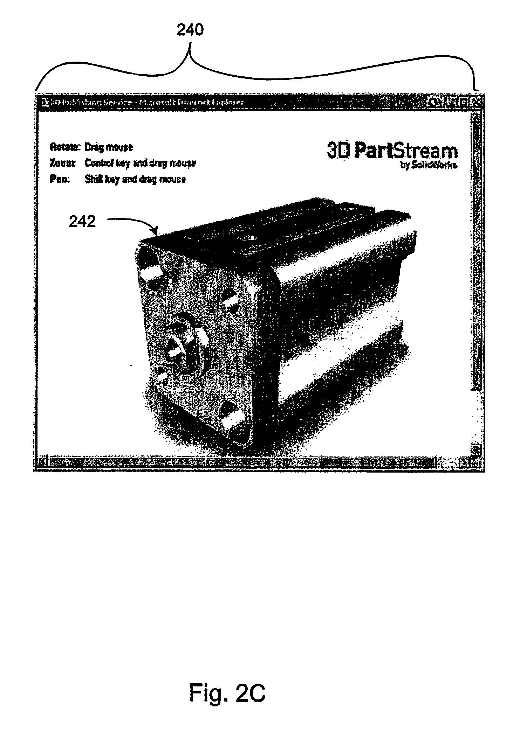

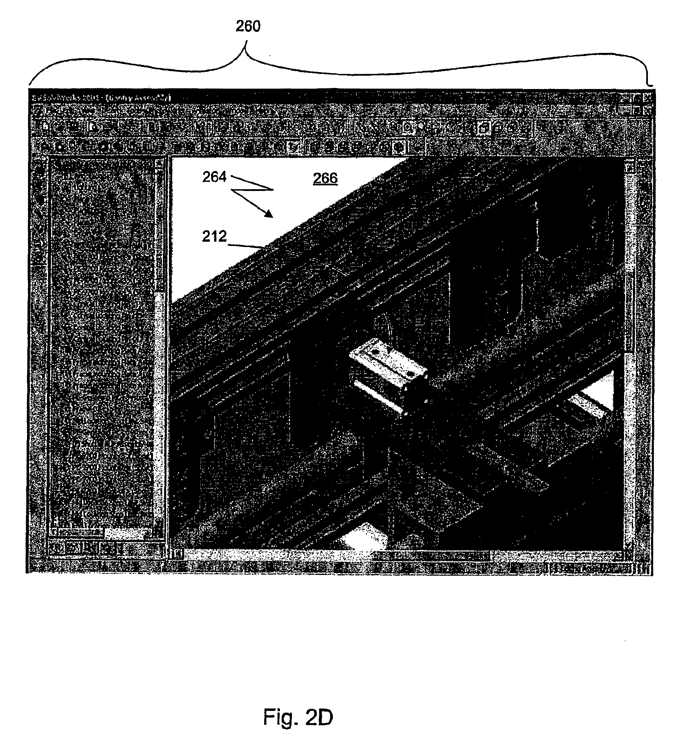

Referring to FIG. 2C, a 3D model of a part 242 is shown in window 240. Window 240 may be displayed after a design engineer activated button 214 (shown in FIG. 2B) to view the 3D model. In one implementation, a design engineer can drag the 3D model of the part 242 from window 240 using a pointing device and drop the part 242 in the modeling portion of a window generated by CAD modeling software. Such a modeling portion of a window was shown as modeling portion 206 with reference to FIG. 2A and is shown as modeling portion 266 in FIG. 2D.

Referring now to FIG. 2D, a window 260 generated by CAD modeling software is shown. In the modeling portion 266 of the window 260, an assembly 264 is displayed. The part 212 is included in the assembly 264. The file defining the part 212 may have been downloaded to the computerized modeling system by activating the "Download CAD File" button 218 shown in FIG. 2B, or by a drag and drop operation whereby an image of the 3D model of part 212 is moved from a window that displays the part (e.g., the window 240 shown in FIG. 2C) to the window 260.

In addition to 3D content, a supplier can provide additional data (e.g., factual information) to the design engineer and others in the product design process. A relationship between the 3D content and the additional data can be established and maintained using a content hotlink. The additional data may be made available locally on the design engineer's computerized modeling system or made available over the Internet.

In one implementation Microsoft's storage technology is used to create and utilize a compound file. However, any application file that can contain custom application data may be used. The compound file acts as a container for one or more files, or one or more storages for data. Thus, the 3D CAD content may be stored in the same file as a specification sheet and other relevant data (e.g., a price list and other cost data, and quality assurance test results) and each may be accessed independently.

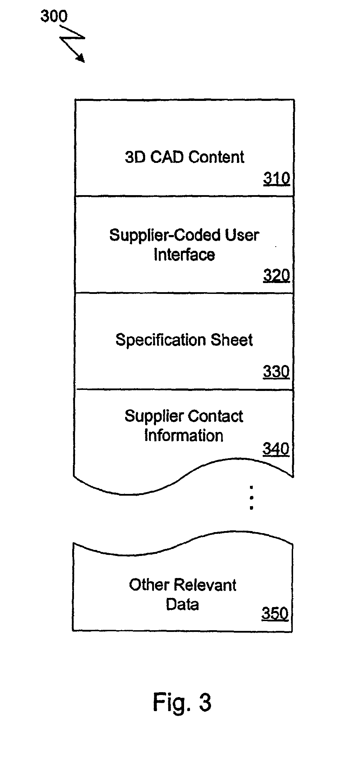

Referring now to FIG. 3, a representation of a compound file 300 is shown. The supplier creates the compound file 300, and therefore, determines the contents therein. The compound file 300 shown in FIG. 3 contains 3D CAD content 310, a supplier-coded user interface 320, a specification sheet 330, supplier contact information 340, and other relevant data 350.

The 3D CAD content 310 defines a 3D model that can be displayed by CAD modeling software. The supplier-coded user interface 320 describes items that the CAD modeling software will display in a menu. The items listed in the menu, when selected, may enable the user (e.g., a design engineer, a manufacturing engineer, or others involved in the design-to-manufacturing process), to view the specification sheet 330, the supplier contact information 340, and other relevant data 350.

In one embodiment, the supplier-coded user interface 320 is an Extensible Markup Language (XML) file. The CAD modeling software contains user interface modules capable of reading the XML file, and capable of constructing and displaying a menu in conformance with the XML instructions therein. XML tags in the XML file specify the menu items. When the user indicates that he or she wants to view the menu, the CAD modeling software displays the menu containing the items specified by the XML tags. The user may indicate that the menu should be displayed by pressing the right mouse button while the cursor is positioned over a 3D model constructed as specified by the 3D CAD content 310. Other embodiments of the present invention may include alternative means of indicating that the menu should be displayed.

The supplier can have control over the user interface exposed by the CAD modeling software and can change the user interface. The supplier may add, change, or remove menu items and update the file via a content server, which later will be discussed. Some implementations, however, may only permit the supplier to control portions of the exposed user interface. For example, the supplier may only be permitted to add, change, or remove specification sheets, updated CAD content, and supplier information.

In addition to specifying menu items, the supplier-coded user interface contains content hotlinks. A particular content hotlink is activated when a corresponding menu item is selected by the user. When a content hotlink is activated, data may be accessed locally on a computerized modeling system or remotely with the aid of a content server.

A software application that takes advantage of the present invention must be able to read the compound file format. That is, the software application must be able to read the compound file type and the data contained therein. For example, a software application may need to recognize and understand the Windows compound file format and, as previously discussed, the embedded XML supplier-coded user interface. This can be achieved by writing an add-in program and installing the add-in for the software application. Additionally, the software application that takes advantage of the present invention must include user-interface modules containing procedures that understand the user-interface language contained in the compound file.

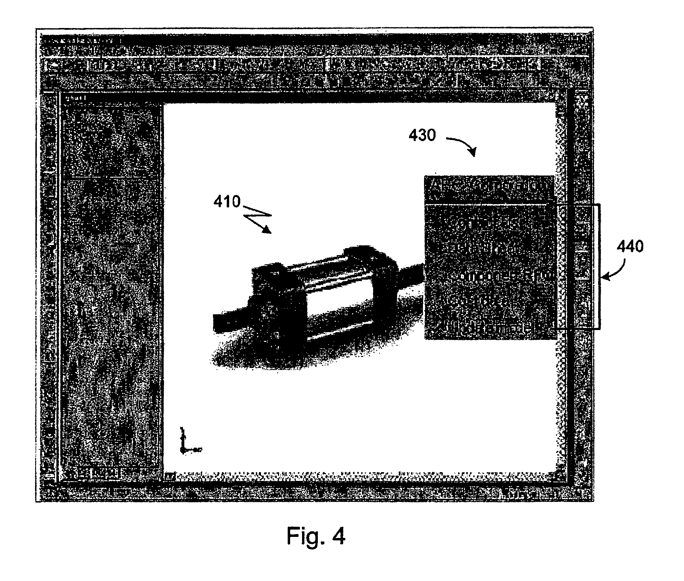

FIG. 4 is an illustration of a CAD model 410 displayed by CAD modeling software. A menu 430 is shown and contains menu items 440. The menu items 440 are defined by the supplier-coded user interface 320 contained in the compound file 300 (illustrated in FIG. 3). As discussed, the menu 430 may appear when the user presses the right mouse button while the cursor is positioned over the CAD model 410. The purpose of the items 440 are to assist the user in contacting a supplier, ABC Corporation, obtaining a data sheet for the part represented by the 3D model 410, submitting a request for a quote for the component, obtaining cost data, and updating the 3D model 410. After one of the items 440 is chosen, a content hotlink is activated and data may be obtained locally. For example, a data sheet for the 3D model 410 may be stored locally within the compound file 300 as specification sheet 330 illustrated in FIG. 3. The item designated "Contact Us" may activate a content hotlink that causes the display of contact information (e.g., the supplier's phone number and email address) in a separate pop-up window. The contact data may be stored locally within the compound file 300 (e.g., as supplier contact data 340 shown in FIG. 3). Other actions, however, may require contacting a remote computer system, such as hardware platform 112 shown in FIG. 1. One content hotlink may provide a link to a supplier's web site or web page where a request for a quote to purchase the physical component represented by the 3D model 410 may be submitted. A second content hotlink may provide another link to a different web site or web page to update the 3D model 410. The link to the remote computer system may be navigated upon execution of the content hotlink. Moreover, the supplier's web site may be managed by the supplier or managed by a third party.

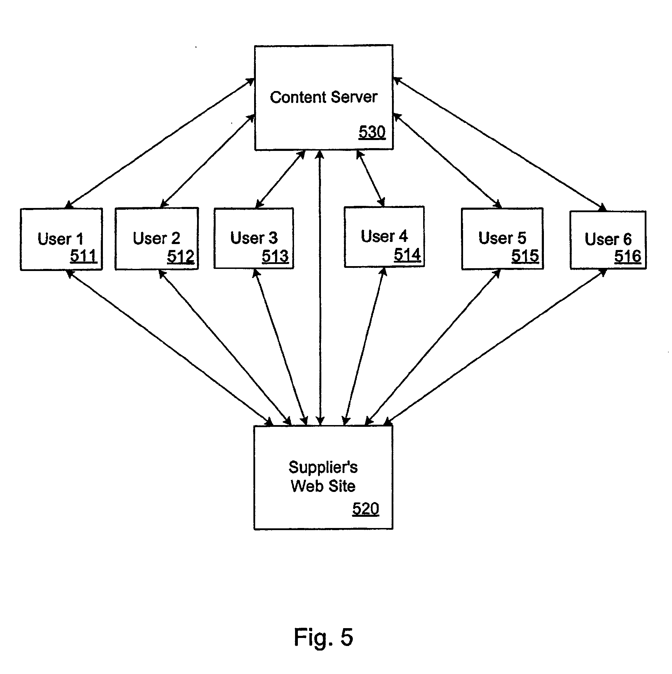

FIG. 5 illustrates the data flow between a supplier's web site 520 and computerized systems 511-516 operated by various users. One or more of the computerized systems 511-516 may be a computerized modeling system 100. Additionally, the computerized systems 511-516 may be similar to a computerized modeling system 100 and may store application software other than CAD modeling software. One of the computerized systems 511-516 may store order management software, another product design management software, and yet another manufacturing resource planning software. Moreover, the computerized systems 511-516 may belong to different legal entities that design distinctive products. All the computerized system 511-516, however, are capable of reading the file format discussed with reference to FIG. 3, or a derivative thereof, displaying the supplier-coded user interface, and properly executing a content hotlink.

To further describe a derivative of the file format discussed with reference to FIG. 3, understood in the design and manufacturing industry is the fact that many users of computerized systems do not need to display 3D models. Some computerized systems may need to display a CAD drawing (i.e., a 2D representation of a 3D model) and others may not need to display a model at all. A drafting system is an example of the former and an order management system is an example of the later. Thus, the computerized systems 511-516 need only be able to read and use a file format containing data for the specific computerized system and be able to use content hotlinks in order to take advantage of the present invention.

As shown in FIG. 5, the computerized systems 511-516 have a direct path to the supplier's web site 520 and a direct path to a content server 530. The content server 530 is a computer server that can also communicate directly with the supplier's web site 520. Additionally, the content server 530 may store 3D content and complementary files (e.g., supplier-coded user interface, a specification, and cost data). Storage of the files may be in the compound file format previously discussed. Furthermore, the files may be organized as an on-line 3D catalog of CAD components.

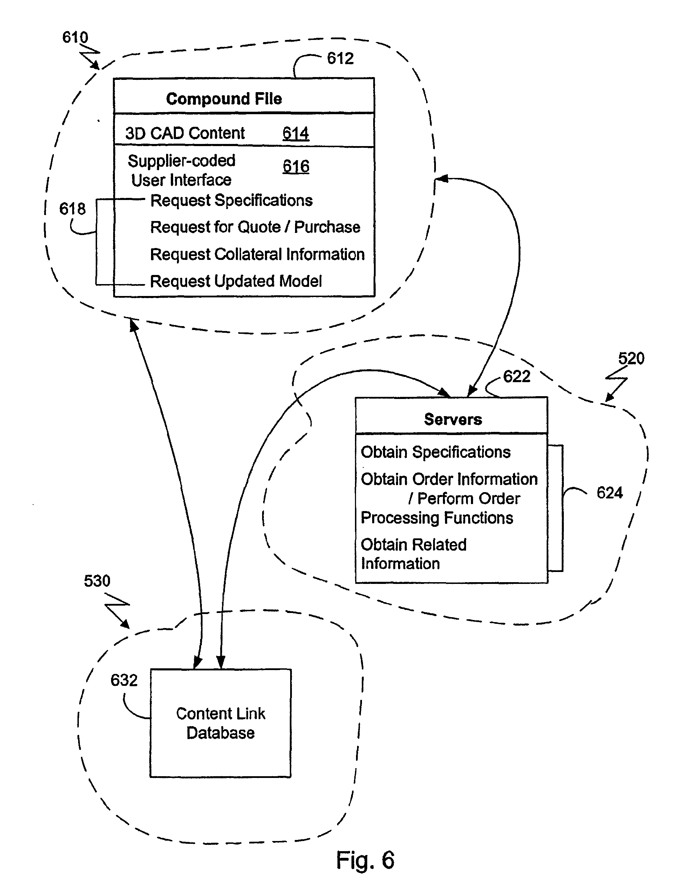

FIG. 6 illustrates the data flow between a user's computer system 610 (such as one of the computerized systems 511-516), a supplier's web site 520, and a content server 530. The content server 530 may be hosted by a third party or be maintained and managed solely by the supplier.

A direct link from the user's computer system 610 to the supplier's web site 520 may be invalid when access is desired to the supplier's web site 520. One reason that a direct link may be invalid is that the supplier may have rearranged the supplier's web site 520 between the time a design engineer began using a 3D model obtained from the supplier and the time that the decision was made to obtain product test results or to purchase the physical component represented by the 3D model. Thus, the content server 530 provides a level of indirection for the content hotlink thereby allowing the supplier to freely rearrange the supplier's web site 520 without the concern of breaking any links between a 3D model utilized in a product design and data stored on the supplier's web site 520.

To maintain the level of indirection facilitated by the content server 530, the supplier simply needs to ensure that the content server 530 is updated with current data. For example, a link to the supplier's web site 520 stored in the content link database 632 may need updating or a compound file stored on the content server 530 may need to be replaced by an updated compound file.

Continuing to refer to FIG. 6, a compound file 612 is stored on the user's computer system 610 and was initially downloaded from the content server 530, or possibly, from the supplier's web site 520. The compound file 612 contains 3D CAD content 614 and contains a supplier-coded user-interface 616. The supplier-coded user interface 616 allows the user to make a selection among several menu items 618. Upon selection of an item, a content hotlink is activated to perform a particular request. If the request requires access to remote data (e.g., to request an updated model or to request a quote for a quantity of components), a content hotlink navigates to a content server 530 configured with a content link database 632. The content link database 632 may be a relational database. Furthermore, the content link database 632 may store a pointer to a data file or an executable file stored on the content server 530, or may store a further link to the supplier's web site 520, depending on the need of the request. By way of non-limiting example, the pointer to the data file stored in the content link database 632 may be a pointer to an updated compound file containing updated 3D CAD content and an updated specification sheet, in addition to contact information and other relevant information. The updated compound file may then be downloaded to the user's computer system 610 and the 3D CAD content stored in the updated compound file may be opened by the CAD modeling software to replace the out-of-date 3D CAD content. The data stored in the updated compound file with the 3D CAD content may also contain updated data. For example, specification sheets and test results may be kept current for the updated model via inclusion in the updated compound file.

The servers 622 configured as part of the supplier's web site 520 may store data and make the data accessible to the user when a content hotlink is activated. As previously discussed, the content link database 632 may store a further link to the supplier's web site 520 enabling the user to access a page at the supplier's web site 520. The supplier's web site configuration may have several servers 622 that store software capable of performing various functions 624. The functions 624 may include obtaining specifications for the component represented by the 3D CAD content, obtaining order information and performing order processing functions, and obtaining related information. One of the servers 622 may store specifications, another server 622 may have information about ordering the physical component represented by the 3D CAD content and may have order processing capabilities, and yet another server 622 may store other information that is related to the 3D model. Moreover, a single server 622 may serve multiple functions. For example, one of the servers 622 may store specifications and have order processing capabilities.

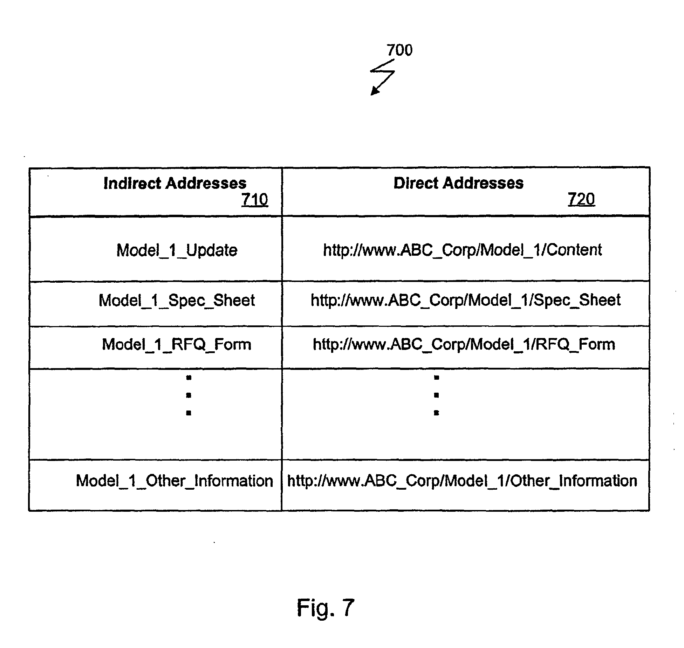

FIG. 7 is an illustration of a data structure 700 that may be used by the content link database 632 to maintain the aforementioned level of indirection between the user's computer system 610 and the supplier's web site 520. The data structure 700 relates indirect addresses 710 stored by a content hotlink in the supplier-coded user interface to direct addresses 720. The direct addresses 720 can be links to various locations at the supplier's web site 520 or on the content server 530. A one-to-one mapping exists between the indirect addresses 710 and the direct addresses 720. The supplier must have the ability to modify the direct addresses 720 to ensure that the direct addresses 720 remain current. Thus, the supplier must have a means to update the data structure 700. In one embodiment, the supplier can access and edit the data structure 700 via the Internet using a user interface designed to facilitate such modifications and programmed by one of ordinary skill in the art.

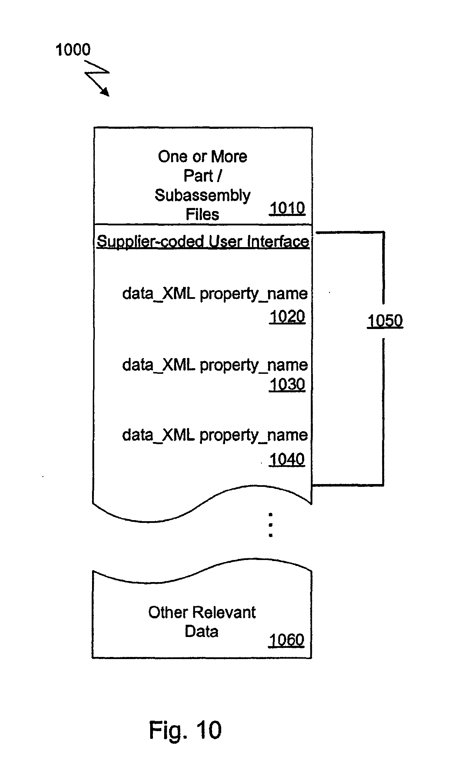

A content hotlink is activated when a user of computer system 610 selects an item from the supplier-coded user interface. When the content hotlink is activated, the software application (e.g., CAD modeling software executing on computer system 610) either displays a hypertext markup language (HTM) file or transmits a pathname (or transmits a property, which will be explained later with reference to FIG. 10) to a content server 530 storing the content link database 632. If an HTM filename is displayed, the software application reads an HTM file that is locally stored and displays the contents. By way of non-limiting example, an HTM file may contain specifications or contact information. If a pathname (or property) is transmitted to the content server 530, control may be transferred to the content server 530 where a lookup operation is performed in the data structure 700 to find an indirect address entry containing the pathname in the content link database 632. A mapping operation is then performed to obtain a direct address. The direct address is then transmitted back to the software application. The software application is then immediately redirected to the appropriate supplier page by displaying the page in a web browser. Those skilled in the art understand how to redirect a software application to a web page using Javascript, the common gateway interface (CGI), and the like.

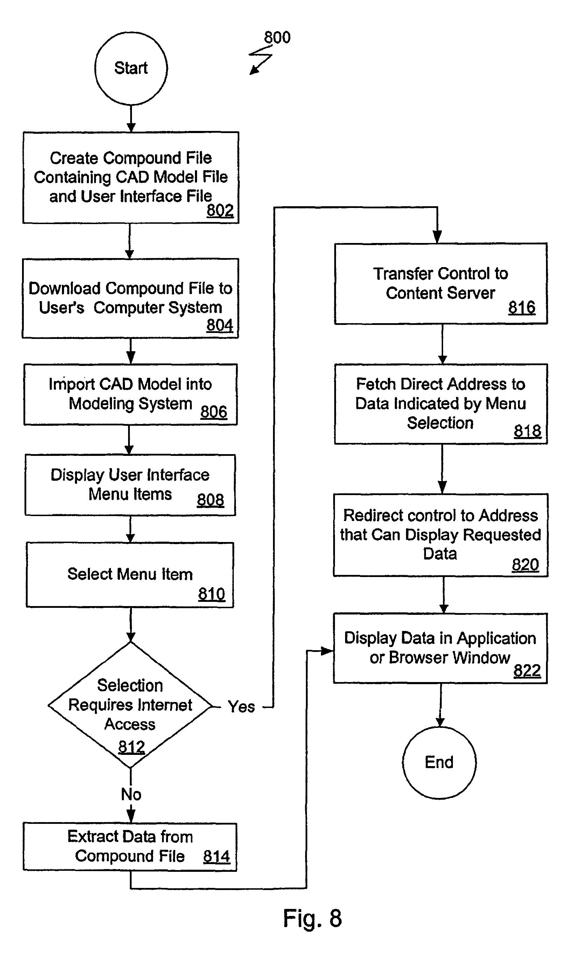

Referring now to FIG. 8, a flowchart of a procedure 800 for utilizing a content hotlink is shown. To begin, a supplier creates a compound file containing a CAD model file and a user interface file (step 802). The user interface file defines user interface menu items and has embedded content hotlinks. The compound file can then be downloaded to a user's computer system (step 804). Once the compound file is downloaded to a user's computer system, the user may then import the CAD model into a computerized modeling system (step 806). The user may then cause the user interface menu items supplied with the CAD model to be displayed (step 808). As previously discussed, the user interface may be displayed when the user presses the right mouse button while the cursor appears over the CAD model. The user may then make a selection from the menu (step 810).

Procedure 800 then determines if the selection requires access to the Internet (step 812). For example, the selection may require data from a remote computer system. The determination of whether access to the Internet is required depends upon the structure of the content hotlink. The content hotlink may contain a path to a remote computer system, and therefore, Internet access is required. Alternately, the content hotlink may be an instruction to open a locally stored file, such as an HTM file contained in the compound file. If the selection requires Internet access, procedure 800 may check whether communication over the Internet is possible and display a warning message in a dialog box if the user's computer system is unable to access the Internet.

If the selection does not require Internet access, the procedure extracts data from the compound file stored locally (step 814). The compound file may contain several files or several storages, and the procedure 800 will read the file or storage that corresponds to the user's menu selection from the compound file. For example, the menu selection may include the text "Data Sheet" and the corresponding storage may contain data that causes a specification sheet to be displayed. The corresponding storage is then processed and the desired data is displayed in an application window or a browser window (step 822).

If the selection requires Internet access, control is transferred to a content server (step 816). Software installed on the content server 530 receives the content hotlink request, which contains an indirect address. A lookup operation is performed to locate the indirect address in a database and to fetch a direct address from the database (step 818). The direct address is then used to locate the data as indicated by the user interface menu item. The data may be located on a supplier's web site or the data may be stored on the content server 530. The content server 530 then redirects control to an address where software can display the requested data (step 820). For example, the address may designate a web page capable of displaying a form used to order the physical component represented by the CAD model. Additionally, identifying data may be transmitted with the request from the user's computer system. By way of non-limiting example, the identifying data can contain a part name and part number. The part name and part number can then be automatically inserted into one or more data fields in an order form. Moreover, a user profile can be stored (e.g., in a cookie) and data in the profile can be retrieved and transmitted with the request. Identifying data can also be retrieved from a user profile stored on the supplier's web site and used in the requested form.

An embodiment of the present invention can enable a content hotlink request to contain a direct address. In this case, rather than control being transferred to a content server as described with reference to FIG. 8, step 816, the direct address is used to locate the data indicated by the user interface selection. A database lookup to fetch the direct address is not necessary because the content hotlink request contains the direct address.

In one embodiment, a content hotlink can include an update mechanism that causes CAD content to be updated automatically. The update mechanism could be implemented by an update procedure that is executed after a user selects a menu item (i.e., after step 810 in procedure 800) and prior to determining if the menu selection requires Internet access (i.e., before step 812 in procedure 800).

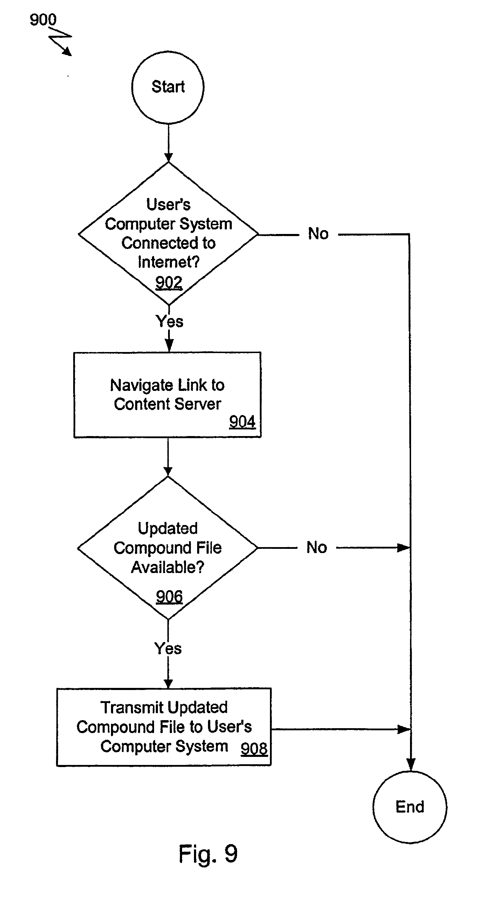

Referring now to FIG. 9, an update procedure 900 is shown. First, the update procedure 900 determines if the user's computer system is connected to the Internet (step 902). If the user's computer system is connected to the Internet, a link is navigated to the content server (step 904) where a determination is made whether an updated compound file is available (step 906), and if so, the updated compound file is transmitted to the user's computer system (step 908) and the procedure 900 ends. If the user's computer system is not connected to the Internet, the compound file cannot be automatically updated, and the procedure 900 ends. The procedure 900 also ends if an updated compound file is not available.

In one embodiment, the user can have more control over the updating mechanism. In this embodiment, when the update mechanism is activated, the user is queried as to whether to check for an updated compound file. The user is therefore given the opportunity to decline having the compound file updated.

After the updated compound file is transmitted to the user's computer system, the CAD model can be immediately updated. Alternatively, rather than immediately updating the CAD model, updated XML tags may be stored in a data file generated by the software application. The software application then can allow for updating when the user initiates a request. For example, the software application can compare an identifier stored in the compound file to an identifier stored on the content server, and update the compound file if the identifier stored therein is older than the identifier stored on the server.

Compound files that may be used by implementations of the present invention to store CAD content, a supplier-coded user interface, and content hotlinks include assembly, subassembly, part, and drawing files. An example of an assembly file structure that can be used by the present invention is shown with reference to FIG. 10.

Referring now to FIG. 10, a CAD assembly file 1000 can store embedded content hotlinks 1020-1040 within a set of supplier-coded user interface commands 1050 in addition to one or more part and/or subassembly files 1010. The embedded content hotlinks 1020-1040 can take the form of XML tags containing a property. When an item from the supplier-coded user interface is selected, a corresponding XML tag stored in the assembly file is read. The property is then transmitted to a content server 530, which stores the content link database 632 that was previously discussed. The property is then located in a data structure, such as in the data structure 700 shown in FIG. 7 as an alternative to an indirect address.

Supplier-specified user interface commands 1050 associated with the CAD assembly file 1000 can be generated automatically. A software program can query the supplier as to what items to include in the user interface used to access relevant data. The items may be standard items that suppliers generally want available to a user (e.g., access to a specification sheet and a web page to place an order). Thus, rather than a supplier-coded user interface as previously described herein, a user interface can be automatically generated and contain supplier-specified user interface items that are associated with a particular XML tag containing a property. When a user interface item is selected, an associated XML tag is read and the appropriate relevant information is located.

One skilled in the art should appreciate that the content hotlinks technology described herein saves a design engineer and others involved in the product design process a considerable amount of time and effort. Benefits afforded by the present invention include the reduction in the amount of time to find needed information, expedited order processing, and enabling many in an organization to access various information related to a model as needed. The present invention provides substantial automation where a great deal of manual intervention (making a phone call to the supplier, searching for a web site) was previously necessary. Moreover, those of ordinary skill in the art will appreciate that the invention could also be used in conjunction with application software that addresses applications other than mechanical design.

The invention may be implemented in digital electronic circuitry, or in computer hardware, firmware, software, or in combinations thereof. Apparatus of the invention may be implemented in a computer program product tangibly embodied in a machine-readable storage device for execution by a programmable processor; and method steps of the invention may be performed by a programmable processor executing a program of instructions to perform functions of the invention by operating on input data and generating output. The invention may advantageously be implemented in one or more computer programs that are executable on a programmable system including at least one programmable processor coupled to receive data and instructions from, and to transmit data and instructions to, a data storage system, at least one input device, and at least one output device. Each computer program may be implemented in a high-level procedural or object-oriented programming language, or in assembly or machine language if desired; and in any case, the language may be a compiled or interpreted language. Suitable processors include, by way of non-limiting example, both general and special purpose microprocessors. Generally, a processor will receive instructions and data from a read-only memory and/or a random access memory. Storage devices suitable for tangibly embodying computer program instructions and data include all forms of non-volatile memory, including by way of example semiconductor memory devices, such as EPROM, EEPROM, and flash memory devices; magnetic disks such as internal hard disks and removable disks; magneto-optical disks; and CD-ROM disks. Any of the foregoing may be supplemented by, or incorporated in, custom-designed ASICs (application-specific integrated circuits).

A number of embodiments of the present invention have been described. Nevertheless, it will be understood that various modifications may be made without departing from the spirit and scope of the invention. By way of non-limiting example, implementations having automatic updating capabilities may update only one of the files stored in the compound file rather than the entire compound file. Usually, if CAD content is updated, specifications and other data also need updating. However, situations may arise where only one file needs to be updated. Furthermore, rather than causing an HTM file to be displayed, a content hotlink may cause a file stored in other file formats to be displayed (e.g., a Microsoft Word or PDF file). An embodiment of the present invention may read the file format of a file, then launch the document using an application registered on the user's computer for that file type. In addition, although the present invention has been discussed with reference to the Internet, one of ordinary skill in the art should appreciate that other network configurations (e.g., an intranet) can take advantage of the present invention.

Implementations may change the order in which operations are performed. Depending on the needs of an implementation, particular operations described herein may be implemented as a combined operation, eliminated, added to, or otherwise rearranged. For example, step 804 and step 806 in FIG. 8 can be combined and implemented as a drag and drop operation, whereby a CAD model can be dragged from a window generated by a supplier's web site and dropped into a window generated by CAD modeling software.

Accordingly, other embodiments are within the scope of the following claims.

## Claims

1. A computer-implemented method for maintaining a relationship between a model of an object and data relevant to the model, the method comprising:
storing data representing the model, the data utilized to construct the model for display by a computerized system;
storing a plurality of user-interface codes for enabling the retrieval of data relevant to the model;
forming an association between the model and the user-interface codes;
displaying a user interface in accordance with the plurality of user-interface codes, the user interface allowing for selection of the data relevant to the model; and
initiating the retrieval of the data relevant to the model by analyzing a link associated with the plurality of user-interface codes to determine the location of the data relevant to the model.

2. The computer-implemented method of claim 1, wherein:
the data relevant to the model is stored externally from the computerized system; and
a level of indirection is provided between the computerized system and a location where the data relevant to the model is stored externally.

3. The computer-implemented method of claim 2, wherein the level of indirection comprises a data structure for associating one of a property or an indirect address with a direct address.

4. The computer implemented method of claim 3 further comprising displaying a web page identified by the direct address in a web browser.

5. The computer-implemented method of claim 3, further comprising updating the direct address to keep current with a web address for the web page.

6. The computer-implemented method of claim 1, wherein the plurality of user-interface codes is generated by an automated process that obtains information about the data relevant to the model, the information comprised of at least one of a filename, a property, and an indirect address.

7. The computer-implemented method of claim 1, wherein the data relevant to the model comprises at least one of factual information and a computer-aided design file.

8. The computer-implemented method of claim 7, further comprising automatically updating the model after an updated version of the model becomes available.

9. The computer-implemented method of claim 1, wherein data relevant to the model comprises at least one of a specification sheet, an order form, cost data, and contact information.

10. The computer-implemented method of claim 1, wherein the plurality of user-interface codes is at least one of a set of instructions and data in an XML form.

11. The computer-implemented method of claim 1, wherein the computerized system is one of a computerized modeling system, a product data management system, a quality control system, a materials requirement and planning system, a computerized numerical control system, a product data modeling system, an engineering resource planning system, a manufacturing resource planning system, and an order management system.

12. The computer-implemented method of claim 1, wherein:
data relevant to the model comprises an order form comprised of a plurality of fields; and
at least one of the plurality of fields contains data transmitted from the computerized system, wherein the transmitted data identifies at least one of a user of the computerized system and the model.

13. The computer-implemented method of claim 1, wherein the association between the model and the user-interface codes is formed by storing the model and the user-interface codes in a compound file.

14. The computer-implemented method of claim 13, further comprising storing the data relevant to the model in the compound file.

15. The computer-implemented method of claim 14 wherein the data relevant to the model is a file having a format that enables the display of the data relevant to the model as one or graphical data and a textual image.

16. The computer-implemented method of claim 1, wherein the association between the model and the user-interface codes is formed by storing the model and the user-interface codes in a computer-aided design assembly file.

17. The computer-implemented method of claim 1, wherein the link is one of a direct address and an indirect address.

18. A computer-implemented method for associating a model of an object with related data, the method comprising:
creating a file containing model definition data and user-interface data comprised of user-interface commands;
storing location data in the file, the location data utilized for determining the location of the related data;
displaying a plurality of items in a menu format in accordance with the user-interface commands;
selecting one of the plurality of items, wherein selecting causes the examination of the location data; and
accessing the related data using the location data to determine a storage location for the related data.

19. The computer-implemented method of claim 18, wherein:
the related data is stored in the file; and
the location data includes one of a filename and a property name.

20. The computer-implemented method of claim 18, wherein:
the related data is stored on a computerized system accessible over a network; and
the location data contains one of a pathname and a property name;
the one of the pathname and the property name is used to retrieve a direct address specifying the storage location of the related data.

21. The computer-implemented method of claim 18, further comprising displaying a window containing the related data.

22. The computer-implemented method of claim 18, wherein the related data comprises at least one of a specification sheet, an order form, cost data, and contact information.

23. The computer-implemented method of claim 18, wherein the location data is one of a direct address and an indirect address.

24. A digital computer comprising:
a memory, data stored in the memory, and control information stored in the memory; and
a data processor for processing the data in accordance with the control information; wherein,
the control information is arranged to:
process a data structure defining a model to generate a model of a real-world three-dimensional object,
associate the model with a plurality of user-interface instructions customized for the model;
display a user interface containing a plurality of items in accordance with the customized user-interface instructions, the plurality of items specified by a supplier of the real-world three-dimensional object;
activate a link to a location upon selection of one of the plurality of items; and
receive data relevant to the model stored at the location, the data relevant to the model corresponding to the one of the plurality of items selected.

25. The digital computer of claim 24, wherein a compound file associates the model with the plurality of user-interface commands, the compound file containing the data structure defining the model and the plurality of user-interface instructions.

26. The digital computer of claim 25, wherein the compound file contains the data relevant to the model.

27. The digital computer of claim 24, wherein the link to the location is one of a filename, a pathname, and a property name.

28. The digital computer of claim 24, wherein the location specifies an address to a networked computer.

29. The digital computer of claim 24, wherein the control information is further arranged to display the data relevant to the model.
